(19) Europäisches Patentamt

European Patent Office

Office européen des brevets

(11) Veröffentlichungsnummer: **0 228 028**
**A1**

(12) **EUROPÄISCHE PATENTANMELDUNG**

(21) Anmeldenummer: 86117581.8

(22) Anmeldetag: 17.12.86

(51) Int. Cl.⁴: **G06F 15/347**

(30) Priorität: 20.12.85 DE 3545357

(43) Veröffentlichungstag der Anmeldung:
08.07.87 Patentblatt 87/28

(84) Benannte Vertragsstaaten:
AT BE CH DE FR GB IT LI NL

(71) Anmelder: **Siemens Aktiengesellschaft Berlin
und München
Wittelsbacherplatz 2
D-8000 München 2(DE)**

(72) Erfinder: **Grallert, Hans-Joachim, Dr.-Ing.
Tannenfleckstrasse 30
D-8038 Gröbenzell(DE)**

(54) **Schaltungsanordnung zur Transformationscodierung.**

(57) Schaltungsanordnung zur Transformationscodierung mit N parallelen Rechenzweigen, denen die Abtastwerte eines Teilbildes zugeführt werden, mit jeweils einer Multiplikationsschaltung (C0 bis C(N-1)) und einem Akkumulator (A0 bis A(N-1)) in jedem Rechenzweig, in dem jeweils ein Spektralwert ($F_i$) ermittelt wird, der über einen Multiplexer (MUX) ausgegeben wird.

**FIG 1**

**EP 0 228 028 A1**

## Schaltungsanordnung zur Transformationscodierung

Die Erfindung betrifft eine Schaltungsanordnung zur Transformationscodierung nach dem Oberbegriff des Patentanspruchs 1.

Transformationsverfahren werden hauptsächlich zur Codierung von Bildsignalen angewendet. Diese Verfahren sind in dem Aufsatz "Picture Coding A Review", Proceedings of the IEEE, Vol. 68, No. 3, March 1980, S. 366-406 beschrieben. Bei der Transformationscodierung werden digitalisierte Abtastwerte, die Bildelementen eines Fernsehbildes entsprechen, in Spektralwerte umgesetzt. Hierbei wird versucht, die ursprünglich zur Darstellung eines Bildelementes verwendete Information auf den tatsächlichen Informationsgehalt zu reduzieren. Die Redundanzinformation wird im allgemeinen durch eine Irrelevanzreduktion ergänzt. Spezielle Verfahren zur digitalen Übertragung von Fernsehbildern sind in der DE-OS 33 04 787 und der DE-OS 33 04 835 beschrieben.

Die Signale des Fernsehbildes werden bei der Transformation in Spektralwerte umgesetzt, deren Koeffizienten übertragen und auf der Empfangsseite in entsprechende Signalwerte (Luminanz und Chrominanz) rückumgesetzt werden. Da es technologisch noch nicht möglich ist, ganze Fernsehbilder geschlossen zu transformieren, begnügt man sich mit der Transformation und Übertragung von Teilbildern. Die Transformation entspricht der mathematischen Multiplikation einer Matrix mit einem Vektor bzw. der Multiplikation mehrerer Matrizen. Diese Multiplikation muß entsprechend der hohen Datenwortrate der Signalwerte eines Fernsehbildes durchgeführt werden.

Aufgabe der Erfindung ist es, eine Schaltungsanordnung mit geringem Aufwand für eine Echtzeit-Transformationscodierung anzugeben.

Diese Aufgabe wird durch die im Patentanspruch 1 angegebenen Merkmale gelöst.

Vorteilhaft bei der erfindungsgemäßen Schaltungsanordnung ist der geringe Hardwareaufwand. Die Schaltung weist eine regelmäßige Struktur auf, dadurch ist sie integrationsfreundlich und einfach realisierbar. Sie ist bei den unterschiedlichsten Transformationsverfahren anwendbar und sowohl für die Hin-als auch für die Rücktransformation geeignet. Falls die Zeilenspeicher (z.B. ROM,RAM,PROM) von außen programmierbar sind, kann ein universell einsetzbarer integrierter Baustein verwendet werden. Die Schaltungsanordnung ist außerdem einfach kaskadierbar, wodurch auch eine variable Transformationslänge realisierbar ist. In den einzelnen Multiplikationsschaltungen muß je Abtastwert nur eine einzige Multiplikation durchgeführt werden.

Ausführungsbeispiele der Erfindung werden anhand von Figuren näher erläutert.

Es zeigen

Fig. 1 ein Prinzipschaltbild der Schaltungsanordnung zur Transformationscodierung,

Fig. 2 eine Steuerung für die Schaltungsanordnung nach Fig. 1,

Fig. 3 die Verwendung eines Lesespeichers als Multiplikator,

Fig. 4 eine Variante der Schaltungsanordnung zur Trans formationscodierung,

Fig. 5 eine zweite Variante der Schaltungsanordnung,

Fig. 6 ein Prinzipschaltbild zur zweidimensionalen Transformationscodierung.

Fig. 7 eine Variante der Schaltungsanordnung zur zweidimensionalen Transformationscodierung,

Fig. 8 ein eindimensionales Fernsehteilbild und

Fig. 9 ein zweidimensionales Fernsehteilbild.

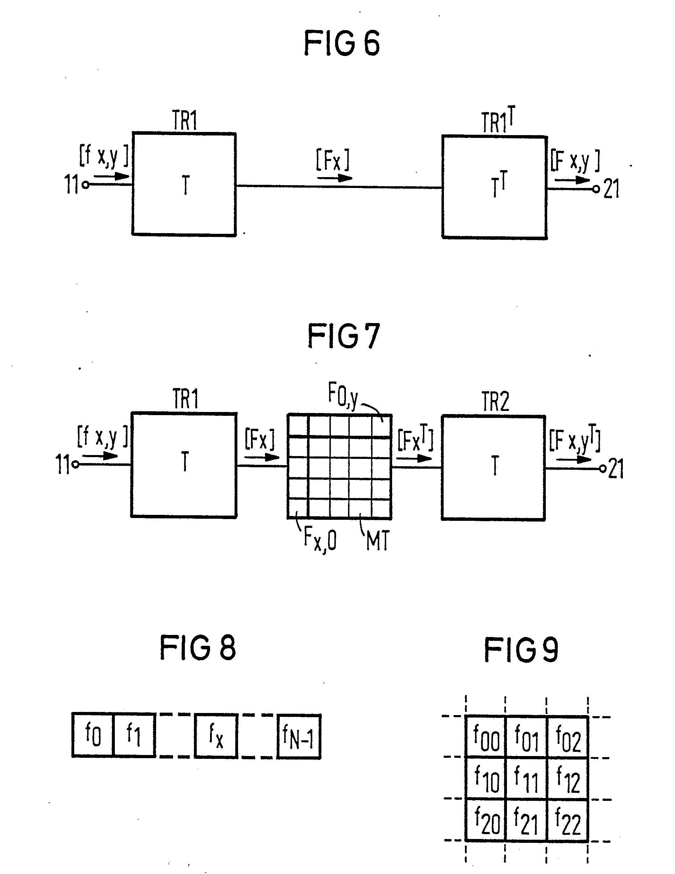

Die Schaltungsanordnung zur Transformationscodierung wird zunächst für ein eindimensionales Fernsehteilbild beschrieben, wie es in Fig. 8 dargestellt ist. Als Transformationsmatrix wird die diskrete Cosinustransformation (DCT) verwendet. Mit der Schaltungsanordnung können jedoch auch andere Transformationen wie beispielsweise Slant-, Walsh-, Haar-und M-Transformationen durchgeführt werden.

Zunächst sollen die theoretischen Voraussetzungen kurz erläutert werden. Die Spektralwerte F lassen sich berechnen durch die Multiplikation der Transformationsmatrix [T] mit einem Vektor [f], dessen Elemente die Abtastwerte $f_0$ bis $f_{N-1}$ eines Fernsehteilbildes darstellen.

(1) $[F] = [T] ^x [f]$

Ein einzelner Spektralwert errechnet sich hierbei durch

$$(2) \quad F_i = \sum_{x=0}^{N-1} f_x \cdot t_{i,x} \qquad i = 0,1,\ldots,N-1$$

Für die gesamte Transformation eines Teilbildes gilt somit

$$(3) \quad \begin{bmatrix} F_0 \\ F_1 \\ \cdot \\ F_i \\ \cdot \\ F_{N-1} \end{bmatrix} = \begin{bmatrix} t_{0,0} & t_{0,2} & \cdot & t_{0,N-1} \\ t_{1,0} & \cdot & t_{1,x} & \cdot \\ \cdot & \cdot & \cdot & \cdot \\ \cdot & \cdot & t_{i,x} & \cdot \\ \cdot & \cdot & \cdot & \cdot \\ t_{N-1,0} & \cdot & \cdot & t_{N-1,N-1} \end{bmatrix} \begin{bmatrix} f_0 \\ f_1 \\ \cdot \\ f_x \\ \cdot \\ f_{N-1} \end{bmatrix}$$

mit den Elementen t der Transformationsmatrix [T].

Die so gewonnenen Spektralwerte $F_i$ werden ausgesendet. Auf der Empfangsseite werden die Abtastwerte f durch Multiplikation der inversen Matrix mit den Spektralwerten $F_i$ wiedergewonnen.

$$(4) \quad [f] = [T]^{-1} \bullet [F]$$

Vor der Übertragung werden die Spektralwerte im allgemeinen einem Datenreduktionsverfahren unterzogen. Im Falle einer ortonormalen symmetrischen Transformationsmatrix gilt

$$(5) \quad [T]^{-1} = [T]$$

so daß zur Hin-und Rücktransformation gleiche Matrix bzw. die gleiche Schaltungsanordnung verwendet werden kann.

Weitere theoretische Grundlagen können dem Buch "Fast Transform" von Elliott, Rao, Academic Press, Orlando USA, 1980 entnommen werden.

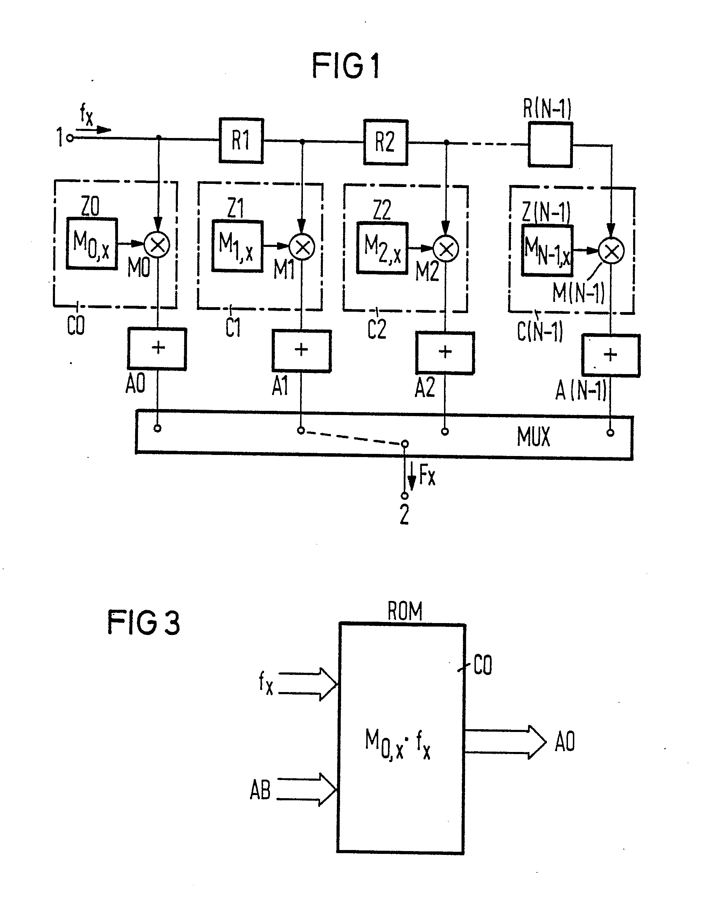

Die Erfindung befaßt sich mit einer Schaltungsanordnung zur Transformationscodierung, wie sie entsprechend Formel 3 durchgeführt wird. Das Prinzipschaltbild der Schaltungsanordnung (Fig. 1) enthält entsprechend der Anzahl N von Elementen $f_x$ des Vektors [f] als Laufzeitglieder N-1 Register R1 bis R(N-1), die in Serie geschaltet sind. Ebenso sind N parallele Rechenschaltungen vorgesehen, deren Eingang des ersten Registers R1 ist mit dem Schaltungseingang 1 verbunden und gleichzeitig mit dem Eingang einer nullten Multiplikationsschaltung $C_0$, deren Ausgang über einen nullten Akumulator $A_0$ mit einem Eingang eines Multiplexers MUX verbunden ist. Eine Multiplikationsschaltung und ein Akkumulator bilden jeweils eine Rechenschaltung. In derselben Weise sind die Ausgänge der Register R1 bis R(N-1) über weitere Multiplikationsschaltungen C1 bis C(N-1) und den zugehörigen nachgeschalteten Akumulatoren mit weiteren insgesamt N Eingängen des Multiplexers MUX verbunden, dessen Ausgang 2 den Schaltungsausgang darstellt. Die Multiplikationsschaltungen enthalten jeweils einen Zeilenspeicher $M_{0,x}$ bis $M_{N-1,x}$, in denen jeweils eine Zeile der Transformationsmatrix [T] gespeichert ist. Der Ausgang des Zeilenspeichers ist jeweils mit einem Eingang eines Multiplizierers M0 bis M(N-1) verbunden, dessen zweiter Eingang den Eingang der Multiplikationsschaltung darstellt.

Als Multiplizierer und gleichzeitig als Akkumulator kann der Baustein ADSP-1010 A der Fa. Analog Devices, Norwood, Massachusetts, USA, verwendet werden.

Dem Schaltungseingang 1 werden suksessive die Abtastwerte eines Fernsehteilbildes zugeführt. Zunächst liegt der Abtastwert $f_0$ am Eingang der nullten Multiplikationsschaltung $C_0$ an, wird mit dem ersten Element $t_{0,0}$ der Transformationsmatrix multipliziert und in den nullten Akkumulator A0 eingeschrieben, der vorher selbstverständlich gelöscht wurde. Nach einem Taktimpuls liegt derselbe Abtastwert $f_0$ am Ausgang des ersten Registers R1 an, wird mit dem ersten Element $t_{1,0}$ der zweiten Zeile der Transformationsmatrix multipliziert und in den ersten Akkumulator A1 eingegeben. Zur selben Zeit würde der Abtastwert $f_1$ bereits mit dem zweiten Element $t_{0,1}$ der ersten Zeile der Transformationsmatrix in der nullten Multiplikationsschaltung multipliziert und zu dem bereits gespeicherten Zahlenwert im nullten Akkumulator A0 hinzuaddiert. Die weiteren Rechenschritte erfolgen analog zu den geschilderten Schritten, wobei mit jedem Taktimpuls das nächste Element einer Zeile der Transformationsmatrix aus dem Zeilenspeicher Z0 abgerufen wird. Nach jeweils N Taktimpulsen liegt am Ausgang des nullten Akkumulators A0 der ersten Spektralwert $F_0$ an, um über den Multiplexer MUX ausgesendet zu werden. Mit jedem weiteren Taktimpuls liegt an einem weiteren Eingang des Multiplexers ein weiterer Spektralwert an bis nach N Taktimpulsen der letzte Spektralwert $F_{N-1}$ ausgesendet wird. Die Schaltungsanordnung arbeitet somit kontinuierlich. Mit dem folgenden Taktimpuls wird bereits der erste Spektralwert $F_0$ des nächsten Teilbildes ausgesendet.

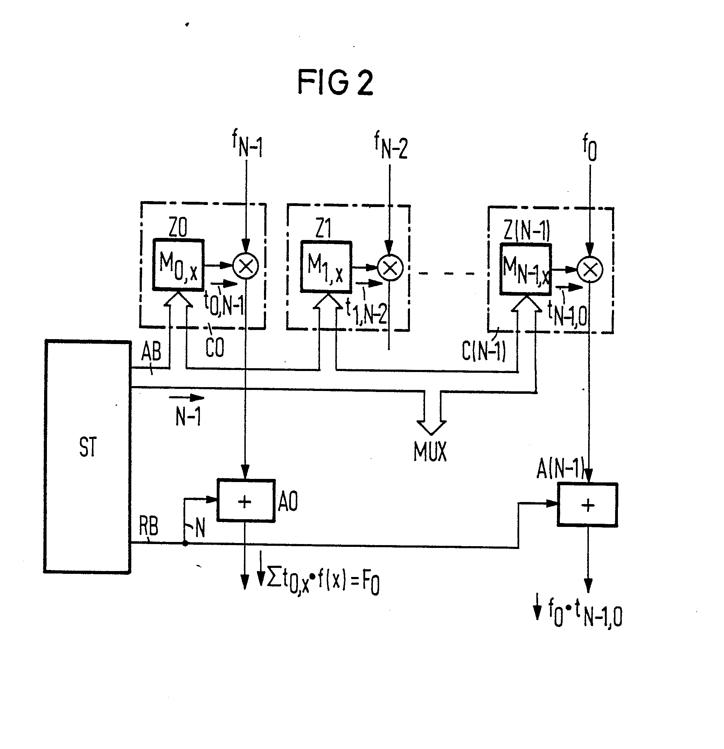

In jedem Zeilenspeicher müssen nacheinander die einzelnen Elemente (Zahlenwerte) einer Matrixzeile adressiert werden. Dies ist schematisch in Fig. 2 dargestellt. Die Adresssierung erfolgt über eine Steuerung ST. Diese wird besonders einfach, wenn unter derselben über einen Adressenbus AB abgegebenen Adresse jeweils unterschiedliche Elemente einer Matrixzeile aus den Zeilenspeichern ausgelesen werden. In Fig. 2 liegen die Abtastwerte $f_0$ bis $f_{N-1}$ an den Eingängen der Multiplizierer der Multiplikationsschaltungen C-(N-1) bis C0 an. Mit der Adresse N-1 wird im nullten Zeilenspeicher Z0 das letzte Element der ersten Matrixzeile ausgelesen, mit dem letzten Abtastwert $f_{N-1}$ eines Teilbildes multipliziert und zu den Inhalt des nullten Akkumulators A0 addiert. Am Ausgang des Akkumulators liegt somit der erste Spektralwert $F_0$ an. Dieser wird über dem Multiplexer MUX ausgesendet und anschließend wird der Inhalt des Akkumulators über einen Rückstellbus RB auf Null gesetzt, damit nach einem weiteren Arbeitakt das Ergebnis der Multiplikation des ersten Abtastwertes eines neuen Teilbildes mit dem ersten Element der ersten Matrixzeile eingespeichert werden kann. Dieser Vorgang wiederholt sich bei allen Multiplikationsschaltungen und Akkumulatoren, die nacheinander jeweils einen Spektralwert an ihren Ausgang abgeben. Zum selben Zeitpunkt, an dem bereits der erste Spektralwert $F_0$ am Ausgang des nullten Akkumulators A0 abgegeben wird, liegt am Ausgang des Akkumolators A(N-1) erst das Produkt des ersten Spektralwertes $f_0$ mit dem nullten Element der letzten Matrixzeile vor.

Als Steuerung kann ein einfacher Binärzähler verwendet werden, dessen Ausgänge den Adressenbus AB bilden, der auch den Multiplexer MUX steuert. Der Rücksetzbus weist N verschiedene Leitungen auf, die nacheinander ein Rücksetzsignal abgeben. Die Codierung der Rücksetzsignale erfolgt über ein Gatternetzwerk aus den Adressen, beispielsweise entsprechend dem Baustein CD 4514 der Fa. RCA, Somerville N.J., USA.

Als Zeilenspeicher können beliebige Speicherbausteine verwendet werden, die die Geschwindigkeitsanforderungen erfüllen. Ebenso können parallelgeschaltete Schieberegister verwendet werden, in denen die Elemente einer Matrixzeile eingespeichert sind.

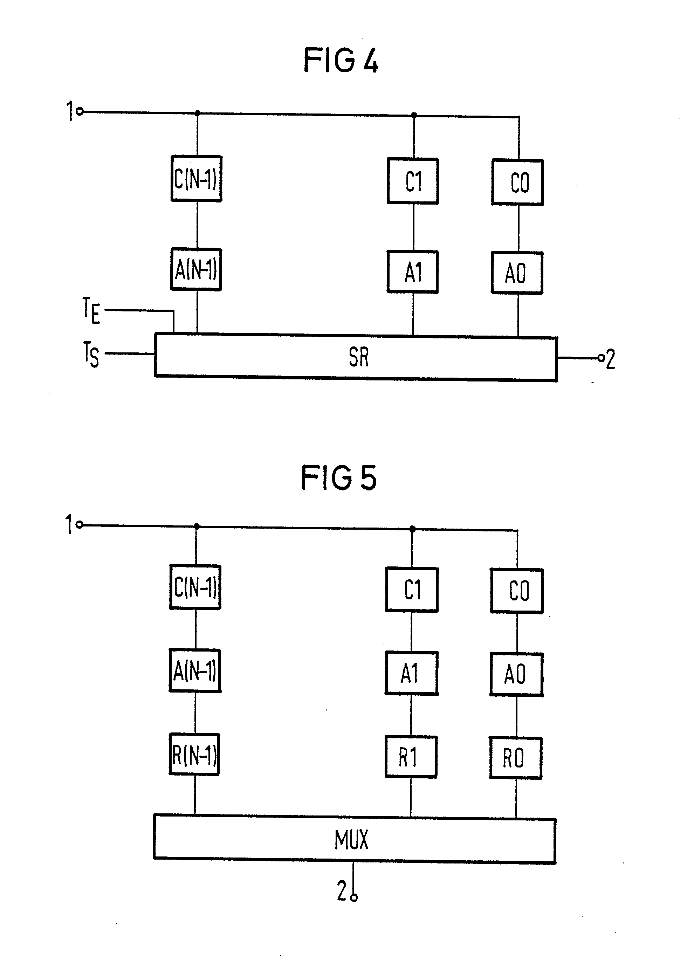

Eine besonders vorteilhafte Ausbildung der Multiplikationsschaltung -hier C0 -ist in Fig. 3 dargestellt. Jede Multiplikationsschaltung enthält eine Lesespeicher (ROM, PROM oder einen entsprechend geladenen RAM), an dessen Adresseneingängen sowohl der Adressenbus AB als auch jeweils ein Abtastwert $f_x$ anliegt. Unter der von Adressenbus und Abtastwert gebildeten Gesamtadresse ist ein Zahlenwert gespeichert, der bereits das Produkt des entsprechenden Elementes einer Matrixzeile mit dem Abtastwert entspricht. Dieses Produkt wird am Datenausgang des Lesespeichers abgegeben und dem Akkumulator zugeführt.

In Fig. 4 ist ein weiteres Ausführungsbeispiel der Schaltungsanordnung dargestellt. Alle Eingänge der Multiplikationsschaltungen C0 bis C(N-1) sind parallel geschaltet und mit dem Schaltungseingang 1 verbunden. Die Ausgänge der Multiplikationsschaltungen sind wieder über Akkumulatoren an Paralleleingänge eines Schieberegisters SR angeschaltet, dessen Ausgang dem Schaltungsausgang 2 entspricht.

Alle Multiplikations-und Additionsvorgänge werden parallel ausgeführt. In den Akkumulatoren liegen die Spektralwerte für ein Teilbild gleichzeitig vor. Im Ausführungsbeispiel Fig. 4 werden diese Werte parallel in das Schieberegister SR mit einem Einspeichertakt $T_E$ übernommen und seriell mit einem Schiebetakt $T_S$ ausgeschoben. Das Schieberegister kann durch Bausteine des Typs SN 5495 A von Texas Instruments aufgebaut werden, bei dem die Daten seriell ausgegeben werden. Durch parallelgeschaltete Schieberegisterketten ist natürlich ebenfalls eine wortparallele Ausgabe möglich. Diese Schaltungsanordnung hat den Vorteil, daß alle Akkumulatoren gleichzeitig gelöscht werden können. Anstelle des Schieberegisters SR kann natürlich auch ein Multiplexer MUX verwendet werden, dessen Eingänge jeweils ein Register als Zwischenspeicher vorgeschaltet ist (Fig. 5). Bei dieser Schaltungsausführung werden die in Fig. 1 am Schaltungseingang liegenden Register zum Datenausgang hin verlagert.

Für die zweidimensionale Transformation, wie sie beispielsweise bei einem Fernsehteilbild nach Fig. 9 mit 3 × 3 Abtastwerten $f_{x,y}$ erforderlich ist, gilt

(6) $[F] = [T] \bullet [f] \bullet [T^T]$

Hierbei ist $[T^T]$ die transponierte Matrix von $[T]$.

4

Eine für diese Transformation geeignete Anordnung ist in Fig. 6 dargestellt. Der Eingang des ersten Transformationsnetzwerkes TR1 ist mit 11 bezeichnet und der Ausgang des Transformationsnetzwerkes ist mit dem Eingang eines zweiten Transformationsnetzwerkes TR1$^T$ verbunden, dessen Ausgang mit 21 bezeichnet ist. Die Transformationsnetzwerke sind mit dem bisher beschriebenen Schaltungsanordnungen identisch. Im ersten Transformationsnetzwerk werden zunächst die Zeilen eines Fernsehteilbildes wie bisher mit den Elementen der Transformationsmatrix [T] multipliziert. Für jede Zeile des Fernsehteilbildes ergibt sich ein Spektralwertspektrum [$F_x$] mit insgesamt N² Spektralwerten. Die einzelnen Spektralwerte werden mit der transformierten Transformationsmatrix [T$^T$] multipliziert, so daß am Ausgang des zweiten Transformationsnetzwerkes eine zweidimensionale Transformation durchgeführt ist. Das zweite Transformationsnetzwerk entspricht dem ersten Transformationsnetzwerk; bei der zu realisierenden Matrix wurden nur Zeilen mit Spalten vertauscht. In Fig. 7 ist eine Realisationsmöglichkeit für die zweidimensionale Transformation mit zwei identischen Transformationsnetzwerken TR1 und TR2 dargestellt. Zwischen beiden Transformationsnetzwerken ist ein Transponationsspeicher MT eingeschaltet, dessen Eingang die Spektralwerte [$F_x$] zugeführt werden und der an seinem Ausgang die transponierten Werte [$F_x^T$] abgibt. Die Arbeitsweise des Transponationsspeichers kann man sich so vorstellen, daß die Spektralwerte $F_x$ spaltenweise in den Speicher eingeschrieben werden und nach dem sämtliche Spektralwerte errechnet sind, zeilenweise wieder aus dem Speicher ausgelesen werden. Für die erste Spalte ergeben die Spektralwerte einen Vektor [$F_{x,0}$] und aus der ersten Zeile wird ein entsprechender Vektor [$F_{0,y}$] ausgelesen. In dieser Schaltung werden die transponierten Spektralwertmatrix [$F_{x,y}^T$] errechnet. In den Transponationsspeicher werden abweichend einmal alle Spektralwerte spaltenweise und dann zeilenweise eingeschrieben. Die in Fig. 7 dargestellte Schaltungsanordnung kann für alle zweidimensionalen Transformationen verwendet werden.

## Ansprüche

1. Schaltungsanordnung zur Transformationscodierung, bei der durch Multiplikation einer N × N Elemente umfassenden Transformationsmatrix ([T]) mit einem einer Folge von Signalwerten darstellenden Vektor ([f]) Spektralwerte ( F ) ermittelt werden, mit Multiplikations-und Additionseinrichtungen, **dadurch gekennzeichnet,** daß N parallele Rechenzweige mit jeweils einer Multiplikationsschaltung (C0 bis C(N-1)) und einem nachgeschalteten Akkumulator (A0 bis A(N-1)) vorgesehen sind, daß jeder Multiplikationsschaltung (C0 bis C(N-1) nacheinander die Elemente ($f_x$) des Vektors ([f]) zugeführt werden, die mit gespeicherten zugehörigen Elementen ($t_{i,x}$ ; i = 0,1...N-1) einer Matrixzeile multipliziert werden, daß die Produkte der Elemente einer Matrixzeile ($t_{i,x}$) mit den Elementen ($f_x$) des Vektors ([f]) in dem Akkumulator ($A_i$) addiert werden und daß die Spektralwerte ($F_i$) nacheinander über eine Multiplexeinrichtung (MUX) ausgesendet werden.

2. Schaltungsanordnung nach Anspruch 1, **dadurch gekennzeichnet,** daß eine Reihenschaltung von Laufzeitgliedern (R1,R2...R(N-1)) vorgesehen ist, daß dem ersten Laufzeitglied und der ersten Multiplikationsschaltung (C0) nacheinander die Elemente ($f_x$) des Vektors ([f]) zugeführt werden und daß die Eingänge der weiteren Multiplikationsschaltungen (C1,C2,...C(N-1)) jeweils an einen Ausgang der Laufzeitglieder (R1,R2,...R(N-1)) angeschlossen sind.

3. Schaltungsanordnung nach einen der vorhergehenden Ansprüche, **dadurch gekennzeichnet,** daß die Eingänge der Multiplikationsschaltungen parallelgeschaltet sind und daß den Akkumulatoren (A0 bis A(N-1)) als Speicher (R0 bis R(N-1)) Register (R0 bis R(N-1)) nachgeschaltet sind, deren Ausgänge eine Multiplikationseinrichtung (MUX) zugeführt sind.

4. Schaltungsanordnung nach Anspruch 3, **dadurch gekennzeichnet,** daß die Ausgänge der Akkumulatoren (A0 bis A(N-1)) mit Paralleleingängen eines Schieberegisters (SR) verbunden sind, das als Multiplexeinrichtung die eingespeicherten Spektralwerte ($F_x$) ausgibt.

5. Schaltungsanordnung nach Anspruch 1, **dadurch gekennzeichnet,** daß die Multiplikationsschaltungen (C0 bis C(N-1)) jeweils einen Zeilenspeicher (Z0 bis Z(N-1)), in dem die Elemente ($t_{i,x}$, i = 0,1...N-1, konstant; x = 0,1...N-1) einer Matrixzeile gespeichert sind, und einen Multiplizierer (M0 bis M (N-1)) enthalten.

6. Schaltungsanordnung nach Anspruch 5,

**dadurch gekennzeichnet,**

daß als Zeilenspeicher (Z0 bis Z(N-1)) adressierbare Lesespeicher (ROM) oder ringförmige Schieberegister vorgesehen sind.

7. Schaltungsanordnung nach Anspruch 1,

**dadurch gekennzeichnet,**

daß als Multiplikationsschaltung (C0,C1,...) ein Lesespeicher (ROM,PROM) vorgesehen ist, dessen Adresseneingänge mit den Adressenbus (AB) einer Steuerung (ST) verbunden sind, dem das jeweilige Element ($f_x$) des Vektors ([f]) als weiterer Adressenteil zugeführt ist und daß das Produkt eines Elements des Vektors ([f]) und des zugehörigen Elements ($t_{i,x}$) der Transformationsmatrixzeile unter der insgesamt anliegenden Adresse ge speichert ist.

8. Schaltungsanordnung nach einem der vorhergehenden Ansprüche,

**dadurch gekennzeichnet,**

daß zur zweidimensionalen Transformation die Reihenschaltung einer ersten Transformations-Schaltungsanordnung (TR1), eins Transponationsspeichers (MT) und einer zweiten Transformations-Schaltungsanordnung (TR2) vorgesehen ist, daß in der ersten Transformations-Schaltungsanordnung (TR1) zunächst eine vollständige eindimensionale Transformation durchgeführt wird, daß die hierbei erhaltenen Produkte ($F_x$) in den Transponationsspeicher (MT) eingeschrieben werden und daß die transponierten Werte ($F_x^T$) der zweiten Transponations-Schaltungsanordnung (TR2) zugeführt werden.

9. Schaltungsanordnung nach Anspruch 8,

**dadurch gekennzeichnet,**

daß in den Transponationsspeicher (MT) die Produkte einer vollständigen Transformation abwechselnd spalten-und zeilenweise eingeschrieben werden.

10. Schaltungsanordnung nach einen der vorhergehenden Ansprüche,

**dadurch gekennzeichnet,**

daß die Steuerung (ST) zur Adressierung der Zeilenspeicher (Z0 bis Z(N-1)) oder Lesespeicher (ROM) vorgesehen ist, daß die Steuerung (ST) die Akkumulatoren (A0 bis A(N-1)) nach der Berechnung eines Spektralwertes ($F_i,F_x$) zurücksetzt und außerdem die Multiplexeinrichtung (MUX,SR) steuert.

# FIG 1

# FIG 3

# FIG 2

## FIG 4

## FIG 5

## FIG 6

TR1
[f x,y] → 11○ → [ T ] → [Fx] → TR1$^T$ [ T$^T$ ] → [F x,y] → ○21

## FIG 7

TR1
[f x,y] → 11○ → [ T ] → [Fx] → F0,y ⌐ MT ⌐ Fx,0 → [Fx$^T$] → TR2 [ T ] → [F x,y$^T$] → ○21

## FIG 8

| f$_0$ | f$_1$ | | f$_x$ | | f$_{N-1}$ |

## FIG 9

| f$_{00}$ | f$_{01}$ | f$_{02}$ |
|---|---|---|
| f$_{10}$ | f$_{11}$ | f$_{12}$ |
| f$_{20}$ | f$_{21}$ | f$_{22}$ |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | ARCHIV FÜR ELEKTRONIK UND ÜBERTRAGUNGSTECHNIK, ELECTRONICS AND COMMUNICATION, Band 31, Nr. 6, Juni 1977, Seiten 217-224, Stuttgart, DE; R. NAWRATH: "Vergleichende Betrachtung von prädiktiven Verfahren und Transformationsmethoden in der Bildkodierung" * Seite 223, rechte Spalte, Zeilen 20-42 * | 1 | G 06 F 15/347 |
| | --- | | |
| Y | US-A-4 196 448 (WHITEHOUSE et al.) * Spalte 4, Zeile 26 - Spalte 5, Zeile 54 * | 1-6,10 | |
| | --- | | |
| Y | GB-A-2 141 847 (SEIKO INSTRUMENTS & ELECTRONICS LTD) * Seite 2, Zeile 41 - Seite 4, Zeile 51 * | 1-6,10 | RECHERCHIERTE SACHGEBIETE (Int. Cl.4) |
| | --- | | H 04 N |
| Y | US-A-4 553 220 (SWANSON) * Spalte 2, Zeile 40 - Spalte 4, Zeile 58 * | 1-6,10 | G 06 F |
| | ---      -/- | | |

Der vorliegende Recherchenbericht wurde für alle Patentansprüche erstellt.

| Recherchenort DEN HAAG | Abschlußdatum der Recherche 17-03-1987 | Prüfer VERSCHELDEN J. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | AFIPS CONFERENCE PROCEEDINGS ON THE 1982 NATIONAL COMPUTER CONFERENCE, Houston, Texas, 7.-10. Juni 1982, Seiten 225-231; G.A. FRANK et al.: "A systolic processor for signal processing" * Seite 228, linke Spalte, Zeile 32 - Seite 230, linke Spalte, Zeile 12 * | 1-6,10 | |
| Y | IEE PROCEEDINGS SECTIONS A-I, Band 130, Nr. 4, August 1983, Seiten 125-130, Old Woking, Surrey, GB; J.V. McCANNY et al.: "Bit-level systolic array circuit for matrix vector multiplication" * Seite 128, linke Spalte, Zeile 10 - Seite 129, linke Spalte, Zeile 21 * | 1-6,10 | |
| Y | PROCEEDINGS OF THE 1985 INTERNATIONAL CONFERENCE ON PARALLEL PROCESSING, 20.-28. August 1985, Seiten 376-383, IEEE, New York, US; I.V. RAMAKRISHNAN et al.: "An optimal family of matrix multiplication algorithms on linear arrays" * Seite 376, rechte Spalte, Zeile 11 - Seite 377, rechte Spalte, Zeile 48 *  --- -/- | 1-6,10 | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 17-03-1987 | VERSCHELDEN J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EINSCHLÄGIGE DOKUMENTE

Seite 3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|-----------|-----|-----|-----|
| A | US-A-4 385 363 (WIDERGREN et al.)<br>* Spalte 3, Zeilen 33-67 * | 7 | |
| A | US-A-4 189 748 (REIS)<br>* Spalte 5, Zeile 27 - Spalte 6, Zeile 5 * | 8 | |
| A | US-A-4 293 920 (MEROLA)<br>* Spalte 3, Zeile 35 - Spalte 8, Zeile 17 * | 2,8 | |
| A | US-A-4 493 048 (HSIANG-TSUNG KUNG et al.) | | |
| A | US-A-4 190 861 (LUX) | | |

-----

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|-----|-----|-----|
| DEN HAAG | 17-03-1987 | VERSCHELDEN J. |